# EUROPEAN PATENT SPECIFICATION

(11) **EP 2 239 556 B1**
(45) Date of publication and mention of the grant of the patent: **26.12.2012**
(21) Application number: 10154134.0
(22) Date of filing: 19.02.2010
(51) Int. Cl.: G01N 3/42

(54) **Universal durometer with improved indentation reading device**
Universaldurometer mit verbessertem Vertiefungslesegerät
Duromètre universel avec un appareil de detection d'indentation amélioré

(30) Priority: 10.04.2009 IT MI20090591
(43) Date of publication of application: 13.10.2010
(73) Proprietor: Affri, Davide, 21056 Induno Olona (VA) (IT)
(72) Inventor: Affri, Davide, 21056 Induno Olona (VA) (IT)
(74) Representative: Modiano, Micaela Nadia

(56) References cited:
- EP-A2- 1 434 045
- WO-A2-2004/036178
- DE-A1- 10 110 109
- JP-A- 2005 345 117
- US-A- 3 763 697
- US-B1- 6 247 356

## Description

The present invention relates to a universal durometer with improved indentation reading device.

A durometer is a measurement instrument designed to measure the hardness of materials.

Such measurement, which consists in performing a geometric measurement of an indentation left by an penetrator body which is made to penetrate into the material to be tested, is a non-destructive test, since the tested object can, in principle, maintain its integrity and functionality unchanged.

If the hardness test is not performed on a laboratory specimen but on a functionally usable mechanical item, such test should be done on areas where a surface defect, which in the specific case is the indentation left by the penetrator, is not significantly important for the functionality of the item proper.

In the course of time, metallurgical engineering has developed a plurality of hardness tests, which differ from each other substantially in the manner in which the hardness test is performed and in the type of penetrator that is used.

The operating principle and the general structure of a durometer are almost identical for the different types of tests: a tip, termed penetrator, is pushed with a known force against the material to be tested and, depending on the hardness of the material and in inverse proportion thereto, the penetrator penetrates into the material for a certain depth.

The indication of the hardness of the material is obtained by measuring the depth of the penetration and/or the size of the indentation.

More particularly, the shape of the penetrator, the method of application of the penetration force, the value of the penetration force, the method for detecting the indentation and the measurement scale used are different for each type of test.

Among known types of hardness tests, each one of which is particularly adapted to test a particular type of materials, hardness tests of the Brinell, Vickers, Rockwell and Knoop types are known.

The Brinell-type hardness test is particularly adapted for testing the hardness of metallic materials that are not particularly hard, such as, for example, soft steels and aluminum alloys in general.

In this type of test, which is standardized by international rules in order to ensure the comparability of measured hardness values for correct evaluation of the characteristics of the materials, the hardness value of the material is obtained from the ratio of the applied load to the area of the indentation left behind.

A penetrator of the Brinell type is constituted by a hardened steel or solid carbide ball, and the measurement of the area of the indentation left behind is reduced to the measurement of the average diameter of such indentation.

The Vickers-type hardness test is particularly adapted to test the hardness of very hard metallic materials such as, for example, hardened steels and cemented steels.

In this type of test, which is standardized by international rules for ensuring the comparability of measured hardness values for correct evaluation of the characteristics of the materials, the hardness value of the material is obtained from the ratio of the applied load to the area of the indentation left.

A penetrator of the Vickers type is constituted by a right pyramid with a square base and with an apex angle of 136°, which is made of diamond, and the measurement of the area of the indentation left behind is reduced to the measurement of the diagonals of such indentation.

The Rockwell-type hardness test is particularly adapted to test the hardness of metallic materials which are not particularly hard, such as, for example, soft steels and aluminum alloys in general, and of very hard metallic materials such as, for example, hardened steel and cemented steel.

In this type of test, which is standardized by international rules for ensuring the comparability of measured hardness values for correct evaluation of the characteristics of the materials, the hardness value of the material is obtained from the ratio of the applied load to the depth of the indentation left.

The Rockwell-type hardness test uses a penetrator constituted by a 1/16-inch hardened steel ball for materials that are not particularly hard and a penetrator constituted by a conical tip made of diamond with an aperture of 120°.

Other than in hardness tests of the Brinell and Vickers types, in the Rockwell-type hardness test the method for applying the penetration force is performed in two steps: a preloading step, during which the machine is set to zero, and a loading step, during which an additional load is added to the preload.

The measurement of the area of the remaining indentation is performed by measuring the depth of such indentation once the additional load has been removed.

The Knoop-type hardness test is particularly adapted for testing the hardness of very hard and fragile materials such as for example ceramics and glass.

In this type of test, which is standardized by international rules for ensuring comparability of measured hardness values for correct evaluation of the characteristics of the materials, the hardness value of the material is obtained from the ratio of the applied load to the area of the indentation left behind.

More precisely, a Knoop-type penetrator is constituted by a pyramid with an elongated rhomboidal base made of diamond, and the measurement of the area of the indentation that is left behind is reduced to the measurement of the longer diagonal of such indentation.

The described known types of hardness tests belong to the category of tests that use as the definition of "hardness" the capacity of a material to withstand penetration by another body made of another harder material, based on the plastic deformation undergone by the tested material during penetration.

However, there are other types of tests that are based on a concept of "hardness" which is based on the elastic response of a material that undergoes a dynamic penetration, i.e., with an impact, of a body made of harder material.

This is the case with the Shore-type hardness test.

This test, which is particularly adapted for testing the hardness of materials with a high elastic coefficient, such as for example elastomers and plastics in general, consists in dropping a heavy body of known weight, in this case a steel ball or a conical tip made of diamond, on the item to be tested from a known height.

By measuring the height of the rebound of the heavy body an indication of the hardness of the material can be obtained.

Apart from this last type of hardness test, in principle durometers of the known type consist of a sort of press provided with a C-shaped supporting structure in which the material to be tested is placed on a shelf loading tray, typically associated with the lower end, while the penetrator is lowered from above.

Currently, the movement of the penetrator is provided by way of motor means which are able to operate with force control thanks to load cells installed between the motor means and the penetrator.

In particular, by working with force control the load is applied gradually by an automated system, eliminating human intervention, i.e., eliminating any mistakes related to human nature.

As regards the measurement of the indentation, it is performed by using micrometric reading devices capable of projecting an image of the indentation left by the penetrator on a calibrated display, by means of digitizing systems or simply by optical reflection by way of mirrors, with a known magnification factor so as to facilitate post-penetration operations.

Such micrometric reading devices consist of an actual microscope installed on the durometer in which, in the more advanced versions, the optical axis coincides with the penetration direction of the penetrator. Of course, in this case the durometer is provided with a system for temporary removal of the penetrator from the field of view of the reading device so as to allow measurement of the indentation after penetration.

In the case of Rockwell-type tests, the measurement of the depth of the indentation left by the penetrator is measured with displacement transducers associated with the penetrator, which measure the sinking of such penetrator in the material to be tested starting from a preset zero position.

The variety of known types of hardness test, the possibility to perform a same type of test with loads and penetrators whose dimensions and shape differ from test to test, as well as the different mechanical penetration resistances offered by the different testable materials, make it possible to have a very broad dimensional range of the indentations that can be obtained from such hardness tests.

It is in fact possible to have a range from an indentation of a few tens of microns, for example for a particularly hard material, to indentations of a few millimeters, for example for particularly soft materials.

In order to have durometers which can be used universally according to the different testing methods of known types of hardness tests with materials of different hardnesses by simply changing the type of penetrator, micrometric reading devices are typically provided with optical or digital zoom devices capable of magnifying and/or scaling down the image of the indentation depending on its size in order to facilitate measurement by the user.

Such durometers of a known type are not devoid of drawbacks, which include the fact that the measurements of the indentation and the control of the extent of the applied load are subject to a number of errors linked to the constructive nature of the micrometric reading devices used and to the system for fixing the penetrator to the load cell.

By using optical zoom devices, the variation of the mutual position of the lenses that form the micrometric reading devices leads to degradation of the quality of the image, making the measurement of the indentation left by the penetrator scarcely reliable.

In particular, a variation of the optimum position of the lenses of the micrometric reading device can lead to a loss of focus and to an increase in optical aberrations, which from the point of view of the user leads to blurred and/or deformed images.

If digital zoom devices were used, one would obtain images whose quality would be closely correlated to the resolution of the digital zoom device used.

In the case of Rockwell-type tests, the measurement performed by the displacement transducers associated with the penetrator, which typically measure the displacement of the entire movable working head of the durometer on which the load cell is fitted, should be corrected on the basis of the deformations undergone by the durometer components interposed between the penetrator and said displacement transducer.

As regards control of the extent of the applied load, the components of the durometer that are interposed between the penetrator and the load cell influence such control.

In fact, these components, being subject to deformations, do not transmit the load applied by the penetrator to the load cell and vice versa correctly, absorbing part of the penetration energy.

EP 1 434 045 A2, DE 101 10 109 A1, JP 2005 345117 A, WO 2004/036178 A2 and US 6247356 B1 disclose hardness testing apparatus including a rotatable turret supporting an indenter shaft and a plurality of objective lenses, whereby rotation of the turret selects the position of any of the indenter shaft and lenses.

The aim of the present invention is to provide a universal durometer that makes it possible to perform hardness tests according to a plurality of types of tests of a known type, with better reliability of the outcome of the test than that of the background art.

Within this aim, an object of the present invention is to provide a universal durometer with improved indentation reading device which allows measuring of the indentation left by the penetrator according to the respective testing methods, solving the drawbacks of the background art.

Another object of the present invention is to provide a universal durometer with a load cell and a penetrator which are mechanically connected to each other in order to solve the drawbacks of the background art.

In accordance with the invention, there is provided a universal durometer as defined in the appended claims.

Further characteristics and advantages of the present invention will become apparent from the description of a preferred but not exclusive embodiment of a universal durometer with improved indentation reading device, according to the invention, illustrated by way of non-limiting example in the accompanying drawings, wherein:

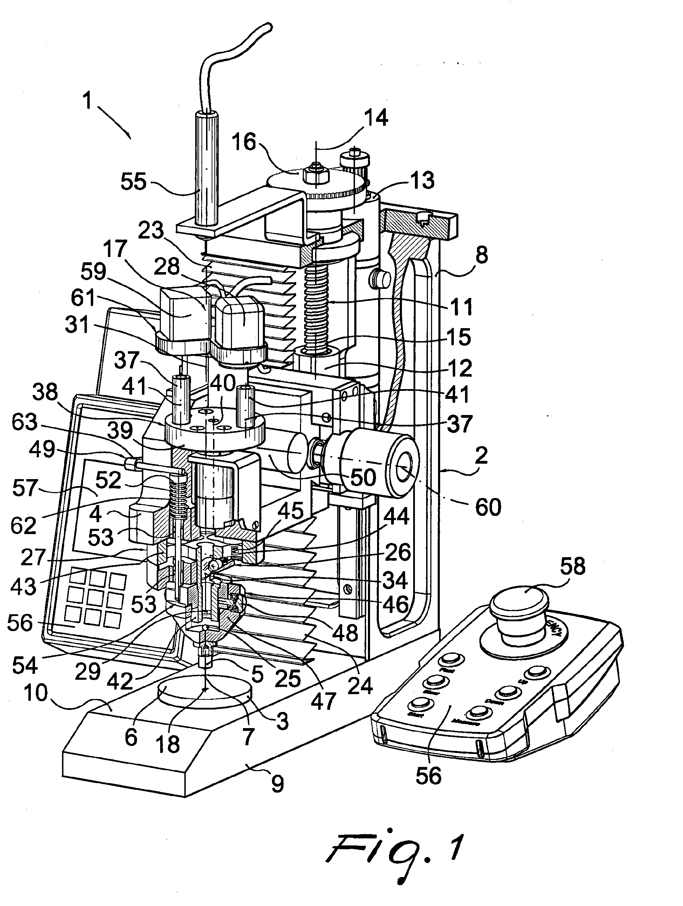

Figure 1 is a partially sectional perspective view of a universal durometer with improved indentation reading device, according to the invention, in a first embodiment;

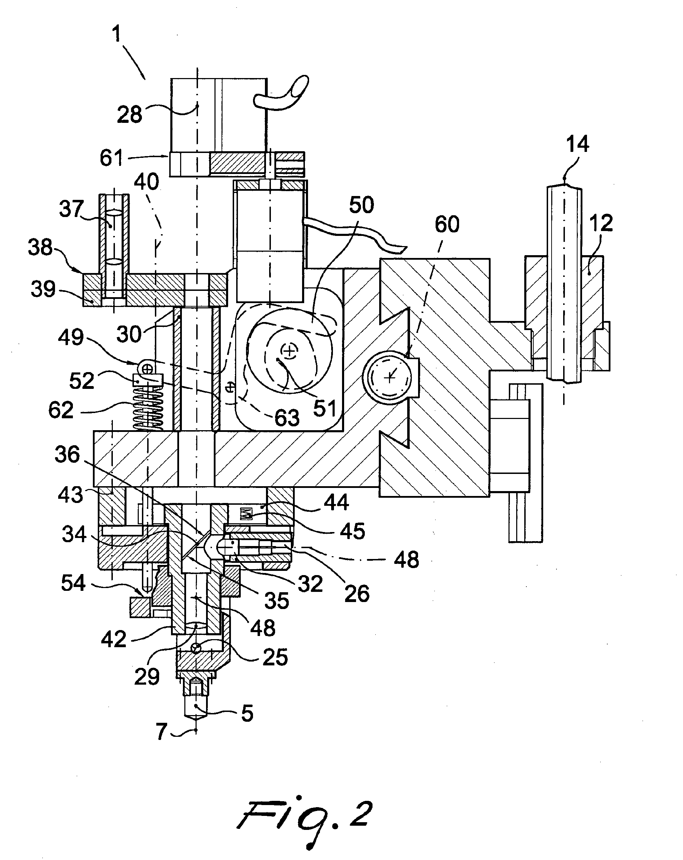

Figure 2 is a sectional view of the durometer shown in Figure 1 with the penetrator arranged along the penetration direction;

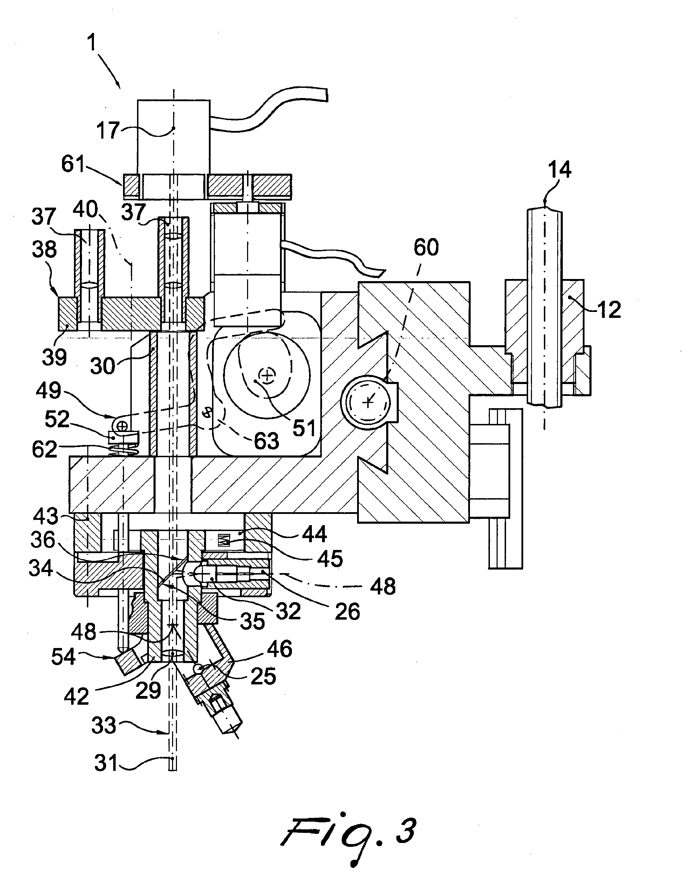

Figure 3 is a sectional view of the durometer shown in Figure 1 with the penetrator arranged outside the field of view of the optical reading means;

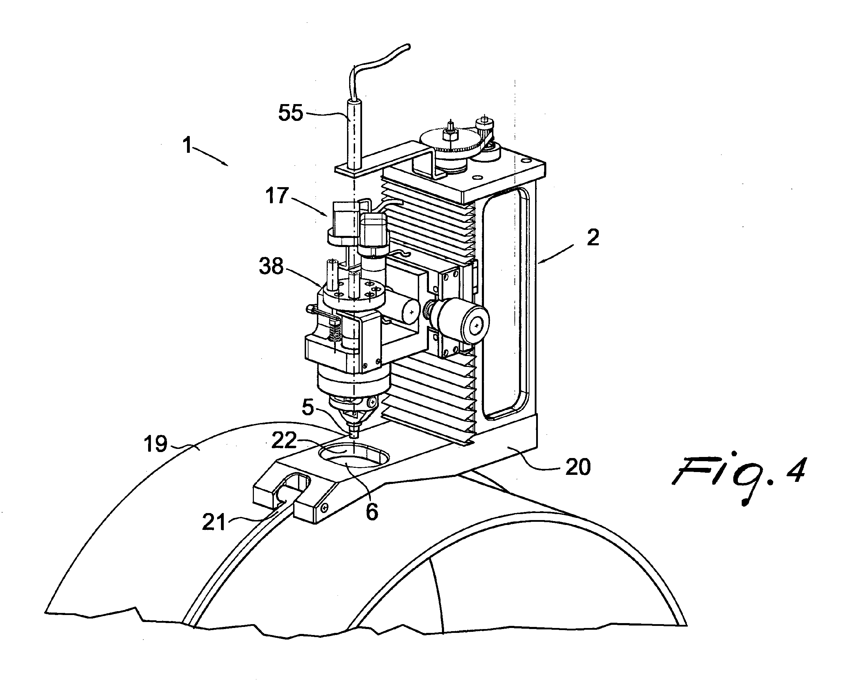

Figure 4 is a perspective view of another embodiment of the durometer shown in Figure 1.

With reference to the figures, the universal durometer with improved indentation reading device, generally designated by the reference numeral 1, comprises a main structure 2, which can be functionally associated with a specimen of material 3 whose hardness is to be measured, and pusher means 4 supported by the main structure 2 and functionally connected to a penetrator 5, which can be pressed with a preset load on a test surface 6 of the specimen of material 3 along a penetration direction 7 which is substantially perpendicular to the test surface 6.

The main structure 2 comprises a pillar 8 which supports the pusher means 4 and a footing 9 which defines a supporting surface 10 on which the specimen of material 3 is to be placed.

More particularly, the pillar 8, which extends substantially parallel to the penetration direction 7, is formed by a box-like body which contains at least one vertical guide 11 which is functionally connected to a slider 12 which can move along said vertical guide 11 due to the action of motor means 13 which can consist, for example, of an electric motor.

A movable working head is functionally connected to the slider 12 and substantially defines the pusher means 4, and the penetrator 5 is fitted thereon.

For allowing micrometric displacements of the working head 4 along the penetration direction 7, the movement of the slider 12 can be provided for example by means of a tubular vertical guide 11, on the outer surface of which a groove 15 is provided which extends helically and longitudinally with respect to the vertical guide 11 according to a predefined profile.

The motor means 13, by turning the vertical guide 11 with respect to its own axis 14 and by means of a suitable reduction unit 16, allow the slider 12, which is not allowed to rotate with respect to the pillar 8, to move along the axis 14 of the vertical guide 11 because it has sliding teeth which are slidingly inserted in the groove 15.

As regards the supporting surface 10, it consists of a flat plate which is substantially perpendicular to the penetration direction 7 on which the specimen of material 3 is to be placed.

Advantageously, as will be better described hereinafter, the supporting surface 10 can be functionally moved closer to the footing 9 and/or further away from it, for example by screw means, to allow the focusing of optical reading means 17 adapted to detect the indentation 18 left by the penetrator 5 on the test surface 6.

If the durometer 1 is used to perform hardness tests directly on a mechanical item which is functionally usable and not on a laboratory specimen, as in the case of large tubular elements 19, it is possible to provide a variation 20 of the footing 9 which comprises means 21 for anchoring to the tubular element 19 and defines an opening 22 for allowing the penetrator 5 to penetrate into the tubular element 19.

In this case, the durometer 1 can have such dimensions and weights that it can be easily carried by the user.

To avoid having to repeat the step for anchoring the durometer 1 to the tubular element 19, if one wishes to perform a plurality of tests on the same item, the working head 4 can be provided with a further translational axis 60, which is defined at right angles to the descent and/or ascent axis 14 of said working head 4.

Of course, this additional degree of freedom is kinematically supported by guides and movement means which are per se known to the person skilled in the art and therefore are not described in the present context.

The working head 4, which protrudes from an open lateral surface of the pillar 8 which is provided with two concertina elements 23 and 24 placed respectively above and below said working head 4 so as to prevent dust and foreign objects from entering the pillar 8, supports the optical reading means 17, means 26 for lighting the indentation 18, and at least one load cell 27, which is interposed between the penetrator 5 and the working head 4 for dynamic control of the load applied to the penetrator 5.

The optical reading means 17 comprise at least one first digital image sensor 28, which can consist for example of a sensor of the CCD type, for capturing the image of the indentation 18, and at least one fixed optical lens 29, which are arranged respectively at the ends of a sleeve 30, which is functionally supported by the working head 4.

The sleeve 30 is oriented so that its own axis, which coincides with the main optical axis 31 of the optical reading means 17, is substantially parallel to the penetration direction 7.

As will be described better hereinafter, in order to have a durometer 1 adapted for the reading of indentations 18 with a highly variable size range, it is possible to provide at least one second digital image sensor 59 in order to capture the image of the indentation 18 so that it is interchangeable with the first digital image sensor 28.

In this case, the first digital image sensor 28 and the second digital image sensor 59, which also can consist of a sensor of the CCD type but with a resolution different from that of the first digital image sensor 28, can be associated with selection means 61, which are per se known to the person skilled in the art and therefore are not described in the present context, for the positioning of one of the two sensors along the main optical axis 31.

As regards the lighting means 26, they comprise a light source 32, which can consist for example of an LED, forming a light beam 33 which is substantially oriented toward the main optical axis 31 and radially thereto, and at least one semireflective lamina 34 accommodated inside the load cell 27.

Advantageously, the semireflective lamina 34 is inclined substantially at 45° with respect to the main optical axis 31 and defines a first reflective surface 35 for reflecting the light beam 33 toward the indentation 18 and a second transparent surface 36 for capturing the image by one of the digital sensors.

As will be described better hereinafter, the light beam 33 projected onto the indentation 18 is reflected toward the digital image sensor 28 or 59 by passing through the semireflective lamina 34.

According to the invention, for having an optical system capable of changing the magnification factor of the image of the indentation 18 so as to have high reliability of the measurements of the indentation 18 despite the broad dimensional range that said indentations can cover, the durometer 1 comprises a plurality of optical lenses 37 which can be alternatively associated with the optical reading means 17 and are functionally supported by selection means 38 for placing one of the optical lenses 37 along the main optical axis 31.

The selection means 38 comprise at least one first rotating lens supporting drum 39, which is rotatably associated with the sleeve 30 about a first rotation axis 40, which is substantially parallel and eccentric with respect to the main optical axis 31 for placing one of the optical lenses 37 at the main optical axis 31.

The first rotating drum 39 can be rotated manually or automatically by way of motor means, which are per se known to the person skilled in the art and therefore not described, or manually by the user of the durometer 1.

Of course, for making said superimposition optically correct, the optical lenses 37 are supported by the first rotating drum 39 so that their optical axes 41 are substantially parallel to the first axis of rotation 40 for their alternating superimposition with the main optical axis 31.

In a possible variation of the durometer 1 which is not shown, the selection means 38 can comprise at least one second rotating lens supporting drum, which is associated rotatably with the sleeve 30 about a second axis of rotation which is substantially perpendicular to the main optical axis 31 for the positioning of one of the optical lenses 37 at the main optical axis 31.

In another possible variation of the durometer 1 which is not shown, the selection means 38 can comprise at least one lens supporting slider, which is slidingly associated with the sleeve 30 along a direction which is substantially perpendicular to the main optical axis 31 for the positioning of one of the optical lenses 37 at said main optical axis 31.

Obviously, in both variations, the optical lenses 37 will be supported respectively by the second rotating drum or by the lens supporting slider so that their optical axes 41 are oriented substantially radially with respect to the second axis of rotation or substantially parallel to the main optical axis 31 for their alternating superimposition on the main optical axis 31.

As regards the load cell 27, it comprises a first portion 42, which is substantially shaped like a hollow pivot inside which the semireflective lamina 34 is inserted, and a second portion 43, which is substantially ring-shaped and is radially external to the first portion 42.

The portions 42 and 43 are substantially coaxial to each other and can be functionally associated respectively with the penetrator 5, whose axis coincides with the penetration direction 7 during the penetration step, and with the working head 4, and are mutually interconnected by a plurality of spokes 44 associated with sensing elements 45 for measuring the applied load, which can consist for example of force transducers such as strain-gauges and the like.

The penetrator 5 is not fitted directly on the load cell 27 but is supported by movement means 46, which comprise a penetrator holder body 47, which functionally supports the penetrator 5 and is rotatably associated with the first portion 42 along a pivoting axis 48 which is substantially perpendicular to the main optical axis 31 for the movement of the penetrator 5 from the viewing field of the optical reading means 17.

The penetrator holder body 47 has a substantially C-shape structure in which the ends of the C-shape are pivoted to the portion 42 of the load cell 27 and the central part of the C-shape is fixed to the penetrator 5 so that the axis of said penetrator is substantially perpendicular to the pivoting axis 48.

The movement of the penetrator holder body 47, which occurs in opposition to the action of elastic return means, can be provided by actuation means 49, which act on said penetrator holder body 47 in order to turn the penetrator 5 with respect to the main optical axis 31.

Advantageously, the actuation means 49, which can be accommodated in the working head 4, comprise a small electric motor 50 which is functionally associated with a cam 51 which acts on a lever 63 functionally associated with a rod 52, which by sliding vertically in an adapted conduit 53 defined by the working head 4 in contrast with other elastic return means 62, pushes a protruding flap 54 of the penetrator holder body 47, causing its rotation.

In a further possible variation of the durometer 1, the actuation means 49 can comprise an electrically powered solenoid in which the ferromagnetic moving core performs the same function as the rod 52.

However, this last solution would be not preferable to the previously described system because the movement of the rod 52, resulting from the rotation of the cam 51, can be modulated better than the electromotive force that can be generated by a solenoid, which generally causes a pulsed movement of the moving core, i.e., would cause an impact.

If the testing method provides for measurement of the depth of the indentation 18 and not the measurement of the surface thereof, such as for example with hardness tests of the Rockwell type, this depth measurement can be performed by means of an interferometric laser sensor 55 combined with a respective spherical target 25, which are placed respectively coaxially to the main optical axis 31 and to the penetrator 5.

The interferometric laser sensor 55 is functionally associated with the supporting pillar 8 and the spherical target 25 is jointly connected to the penetrator holder body 47 so that the light beam generated by the interferometric laser sensor 55 follows the main optical axis 31 for measuring the depth with which the penetrator 5 penetrates into the specimen of material 3.

In addition to the mechanical and optical components described so far, the durometer 1 is provided with electronic and data-processing components adapted to manage said durometer 1 and adapted for interfacing with the user and for processing the measurements made.

For example, the durometer 1 can have one or more keypads 56 and a monitor 57 by means of which the user can set the test mode and view the indentation 18 magnified by the selected magnification factor or view the penetration advancement of the penetrator 5 into the specimen of material 3 and thus measure the size or depth of the indentation 18.

Obviously, such electronic and data-processing components comprise systems for processing data acquired by the load cell 27 and the image captured by the optical reading means 17 or optionally by the interferometric laser sensor 55, which are necessary in order to control the applied load and to move the movable components of the durometer 1, as well as all the technical solutions, such as for example an emergency button 58 and the like, which are typical of testing machines.

Operation of the universal durometer 1 with improved indentation reading device is described hereinafter.

Once the specimen of material 3 has been placed on the supporting base 10, depending on the type of test to be performed, the most appropriate optical lens 37 to be used for reading the indentation 18 and the most appropriate image sensor 28 or 59, if more than one is provided, are selected.

Once the entire optical system that will be used to detect the indentation 18 has thus been defined, the working head 4 is moved closer or further away in order to focus the test surface 6.

After the criteria for increasing the load to be applied and any other parameters that are typical of a hardness test have been set, the test is performed.

During this step, the working head 4 descends, making the penetrator 5 penetrate (other than in the focusing step, such penetrator occupies the field of view of the optical reading means 17) into the specimen of material 3 with continuous control between the load that is actually applied and the set load.

This control is possible due to the deformation of the strain-gauges 45 inserted in the load cell 27, which send a signal to a control unit in real time which control unit compares it with a reference value that corresponds to the preset load.

In this way a closed-loop control is provided.

Once the preset load value has thus been reached, the working head 4 is lifted to the initial position where the optical reading means 17 were focused.

Moving the penetrator holder body 47 from the viewing field of the optical system of the durometer 1, one proceeds with the acquisition of the image and then to its measurement of the indentation 18 in order to calculate the hardness value in a manner that corresponds to the type of test performed.

This acquisition is made particularly easy thanks to the lighting means 26 that locally illuminate the indentation 18.

If the durometer 1 is used to perform a Rockwell-type hardness test, once penetration has been performed, the working head 4 is lifted until the applied load is restored to the typical preloading value of this type of test and, by means of the interferometric laser sensor 55, the depth of the indentation 18 is measured for calculation of the hardness value in a manner that corresponds to the type of test performed.

In practice it has been found that the universal durometer with improved indentation reading device, according to the present invention, fully achieves the intended aim and objects, since it makes it possible to perform a plurality of types of hardness tests, maintaining a better reliability of the measures taken than in the background art.

Another advantage of the durometer according to the present invention is that it is a particularly slender and lightweight machine, so that it can be transported easily.

More precisely, the footprint required for the swapping maneuver between the penetrator and the optical system has been reduced to a minimum to leave maximum space available to the operator during the testing step so as to be able to reach points that were hitherto difficult to test.

The universal durometer with improved indentation reading device thus conceived is susceptible of numerous modifications and variations, all of which are within the scope of the appended claims.

In practice, the materials used, as long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A universal durometer with improved indentation reading device, comprising a main structure (2), which is functionally associable with a specimen of material (3) whose hardness is to be measured, pusher means (4) supported by said main structure (2) and functionally connected to a penetrator (5) which can be pressed with a preset load on a test surface (6) of said specimen of material (3) along a penetration direction (7) which is substantially perpendicular to said testing surface (6) and optical reading means (17) which are functionally associated with said pusher means (4) for reading the indentation (18) left by said penetrator (5) on said testing surface (6), said optical reading means (17) comprising a main optical axis (31), which substantially coincides with said penetration direction (7), said penetrator (5) being supported by movement means (46) for moving said penetrator (5) from the viewing field of said optical reading means (17), a plurality of optical lenses (37) which can be associated alternatively with said optical reading means (17) for varying the magnification factor of the image of said indentation (18) detected by said optical reading means (17), said optical lenses (37) being functionally supported by first selection means (38) for positioning one of said optical lenses (37) along said main optical axis (31), said optical reading means (17) comprising at least one first digital image sensor (28) for capturing said image and at least one fixed optical lens (29), which are placed respectively at the ends of a sleeve (30) which is functionally supported by said pusher means (4), the axis of said sleeve (30) substantially coinciding with said main optical axis (31), said optical reading means (17) comprising at least one second digital image sensor (59) for capturing said image which is interchangeable with said at least one first digital image sensor (28), said at least one first digital image sensor (28) and said at least one second digital image sensor (59) being associated with second selection means (61) for the positioning of one of said at least one first digital image sensor (28) and said at least one second digital image sensor (59) along said main optical axis (31), said first selection means (38) comprising at least one first rotating lens supporting drum (39),
which is rotatably associated with said sleeve (30) about a first axis of rotation (40) substantially parallel and eccentric with respect to said main optical axis (31), for arranging one of said optical lenses (37) at said main optical axis (31), said optical lenses (37) being supported by said first rotary drum (39) so that their optical axes are substantially parallel to said first rotation axis (40) for their alternating superimposition with said main optical axis (31), the durometer further comprising at least one load cell (27), which is interposed between said pusher means (4) and said penetrator (5) for the dynamic control of the load applied to said penetrator (5), said at least one load cell (27) comprising a first portion (42), which is substantially shaped like a hollow pivot and is oriented coaxially to said main optical axis (31), and a second portion (43), which is substantially ring-shaped and radially external to said first portion (42), said first portion (42) and said second portion (43) being substantially coaxial to each other, functionally associable respectively with said penetrator (5) and with said pusher means (4) and mutually interconnected by a plurality of spokes (44) associated with sensing elements (45) for measuring said applied load, said movement means (46) comprising a penetrator holder body (47) which functionally supports said penetrator (5) and is rotatably associated with said first portion (42) along a pivoting axis (48) substantially perpendicular to said main optical axis (31) for moving said penetrator (5) from said viewing field in contrast with elastic return means.

2. The durometer according to claim 1, **characterized in that** it comprises means (26) for lighting said indentation (18) which are functionally supported by said sleeve (30).

3. The durometer according to claim 2, **characterized in that** said lighting means (26) comprise a light source (32), which defines a light beam (33) that is substantially oriented toward said main optical axis (31) and radially to it and at least one semireflective lamina (34) which is accommodated inside said load cell (27), is inclined with respect to said main optical axis (31) and defines a first reflective surface (35) for reflecting said light beam (33) toward said indentation (18) and a second transparent surface (36) for capturing said image by one of said at least one first digital image sensor (28) and said at least one second digital image sensor.

4. The durometer according to one or more of the preceding claims, **characterized in that** it comprises actuation means (49) which act on said penetrator holder body (47) for the rotation of said penetrator (5) with respect to said main optical axis (31).

## Patentansprüche

1. Ein Universaldurometer mit verbessertem Vertiefungslesegerät, das eine Hauptstruktur (2) umfasst, die funktionell mit einer Probe von Material (3) assoziiert werden kann, dessen Härte gemessen werden soll, Schubmittel (4), die von der Hauptstruktur (2) getragen werden und funktionell mit einer Prüfspitze (5) verbunden sind, die mit einer voreingestellten Last auf eine Testoberfläche (6) der Probe von Material (3) entlang einer Penetrationsrichtung (7) gedrückt werden kann, die im Wesentlichen senkrecht zu der Testoberfläche (6) ist, und optische Lesemittel (17), welche funktionell mit den Schubmitteln (4) assoziiert sind, zum Lesen der Vertiefung (18), die von der Prüfspitze (5) in der Testoberfläche (6) hinterlassen wird, wobei die optischen Lesemittel (17) eine optische Hauptachse (31) umfassen, die im Wesentlichen mit der Penetrationsrichtung (7) zusammenfällt, wobei die Prüfspitze (5) von Bewegungsmitteln (46) zur Bewegung der Prüfspitze (5) aus dem Sichtfeld der optischen Lesemittel (17) getragen wird, eine Vielzahl optischer Linsen (37), die alternativ mit den optischen Lesemitteln (17) assoziiert werden können, um den Vergrößerungsfaktor des Bildes der Vertiefung (18) zu variieren, die von den optischen Lesemitteln (17) erfasst wird, wobei die optischen Linsen (37) funktionell von ersten Auswahlmitteln (38) zur Positionierung einer der optischen Linsen (37) entlang der optischen Hauptachse (31) getragen werden, wobei die optischen Lesemittel (17) mindestens einen ersten digitalen Bildsensor (28) zur Aufnahme des Bildes und mindestens eine feste optische Linse (29) umfassen, die jeweils an den Enden einer Hülse (30) positioniert sind, welche funktionell von den Schubmitteln (4) getragen wird, wobei die Achse der Hülse (30) im Wesentlichen mit der optischen Hauptachse (31) zusammenfällt und die optischen Lesemittel (17) mindestens einen zweiten digitalen Bildsensor (59) zur Aufnahme des Bildes umfassen, der mit dem mindestens einen ersten digitalen Bildsensor (28) austauschbar ist, wobei der mindestens eine erste digitale Bildsensor (28) und der mindestens eine zweite digitale Bildsensor (59) mit zweiten Auswahlmitteln (61) zur Positionierung von einem des mindestens einen ersten digitalen Bildsensors (28) und des mindestens einen zweiten digitalen Bildsensors (59) entlang der optischen Hauptachse (31) assoziiert sind, wobei die ersten Auswahlmittel (38) mindestens eine erste sich drehende linsentragende Trommel (39) umfassen, die drehbar um eine erste Drehachse (40), die im Wesentlichen parallel und exzentrisch in Bezug zu der optischen Hauptachse (31) ist, mit der Hülse (30) assoziiert ist, und zwar zur Anordnung einer der optischen Linsen (37) an der optischen Hauptachse (31), wobei die optischen Linsen (37) so von der ersten Drehtrommel (39) getragen werden, dass ihre optischen Achsen zum Zwecke ihrer alternierenden Überlagerung mit der optischen Hauptachse (31) im Wesentlichen parallel zu der ersten Drehachse (40) sind, wobei das Durometer weiter mindestens eine Messdose (27) umfasst, die zur dynamischen Steuerung der auf die Prüfspitze (5) ausgeübten Last zwischen den Schubmitteln (4) und der Prüfspitze (5) angeordnet ist, wobei die mindestens eine Messdose (27) einen ersten Abschnitt (42) umfasst, der im Wesentlichen wie ein hohler Drehzapfen geformt ist und koaxial mit der optischen Hauptachse (31) ausgerichtet ist, und einen zweiten Abschnitt (43), der im Wesentlichen ringförmig ist und radial extern zu dem ersten Abschnitt (42) liegt, wobei der erste Abschnitt (42) und der zweite Abschnitt (43) im Wesentlichen koaxial miteinander sind, funktionell jeweils mit der Prüfspitze (5) und mit den Schubmitteln (4) assoziierbar sind und miteinander durch eine Vielzahl von Speichen (44) verbunden sind, die mit Messelementen (45) zur Messung der ausgeübten Last assoziiert sind, wobei die Bewegungsmittel (46) einen Prüfspitzen-Haltekörper (47) umfassen, der die Prüfspitze (5) funktionell trägt und drehbar entlang einer Drehachse (48), die im Wesentlichen senkrecht zu der optischen Hauptachse (31) ist, mit dem ersten Abschnitt (42) assoziiert ist, zur Bewegung der Prüfspitze (5) aus dem Sichtfeld gegen die Wirkung von elastischen Rückstellmitteln.

2. Das Durometer gemäß Anspruch 1, **dadurch gekennzeichnet, dass** es Mittel (26) zur Beleuchtung der Vertiefung (18) umfasst, die funktionell von der Hülse (30) getragen werden.

3. Das Durometer gemäß Anspruch 2, **dadurch gekennzeichnet, dass** die Beleuchtungsmittel (26) eine Lichtquelle (32) umfassen, die einen Lichtstrahl (33) bestimmt, welcher im Wesentlichen zu der optischen Hauptachse (31) hin und radial zu ihr ausgerichtet ist, und mindestens ein halbreflektierendes Plättchen (34), das in der Messdose (27) untergebracht ist und im Verhältnis zu der optischen Hauptachse (31) geneigt ist und eine erste reflektierende Oberfläche (35) zum Reflektieren des Lichtstrahls (33) zu der Vertiefung (18) hin und eine zweite transparente Oberfläche (36) zur Aufnahme des Bildes durch einen des mindestens einen ersten digitalen Bildsensor (28) und den mindestens einen zweiten digitalen Bildsensor bestimmt.

4. Das Durometer gemäß einem oder mehreren der obigen Ansprüche, **dadurch gekennzeichnet, dass** es Betätigungsmittel (49) umfasst, die auf den Prüfspitzen-Haltekörper (47) zum Zwecke der Drehung der Prüfspitze (5) im Verhältnis zu der optischen Hauptachse (31) µmfasst.

## Revendications

1. Duromètre universel avec un dispositif de lecture d'indentation amélioré comprenant une structure principale (2) pouvant être associée fonctionnellement à un spécimen de matériau (3), dont la dureté doit être mesurée, des moyens pousseurs (4) portés par ladite structure principale (2) et reliés fonctionnellement à un pénétrateur (5) pouvant être pressé avec une charge préréglée sur une surface d'essai (6) dudit spécimen de matériau (3), le long d'une direction de pénétration (7) essentiellement perpendiculaire à ladite surface d'essai (6), et des moyens de lecture optique (17) associés fonctionnellement audits moyens pousseurs (4) et servant à lire l'indentation (18) laissée par ledit pénétrateur (5) sur ladite surface d'essai (6), ledit moyen de lecture optique (17) comprenant un axe optique principal (31) qui coïncide essentiellement avec ladite direction de pénétration (7), ledit pénétrateur (5) étant porté par des moyens de déplacement (46) servant à déplacer ledit pénétrateur (5) depuis le champ de vision desdits moyens de lecture optique (17), une pluralité de lentilles optiques (37) pouvant être associées alternativement auxdits moyens de lecture optique (17) et servant à varier le facteur de magnification de l'image de ladite indentation (18) détectée par ledit moyen de lecture optique (17), lesdites lentilles optiques (37) étant portées fonctionnellement par des premiers moyens de sélection (38) servant à positionner une desdites lentilles optiques (37) le long dudit axe optique principal (31), lesdits moyens de lecture optique (17) comprenant au moins un premier capteur d'image numérique (28) servant à capturer ladite image et au moins une lentille optique fixe (29), qui sont disposés respectivement aux extrémités d'un manchon (30) porté fonctionnellement par lesdits moyens pousseurs (4), l'axe dudit manchon (30) coïncidant essentiellement avec ledit axe optique principal (31), lesdits moyens de lecture optique (17) comprenant au moins un second capteur d'image numérique (59) servant à capturer ladite image et interchangeable avec ledit premier capteur d'image numérique (28), ledit au moins un premier capteur d'image numérique (28) et ledit au moins un second capteur d'image numérique (59) étant associés à des seconds moyens de sélection (61) servant à positionner un parmi ledit au moins un premier capteur d'image numérique (28) et ledit au moins un second capteur d'image numérique (59) le long dudit axe optique principal (31), lesdits premiers moyens de sélection (38) comprenant au moins un tambour porte-lentille rotatif (39) associé audit manchon (30) de façon rotative autour d'un premier axe de rotation (40) essentiellement parallèle et excentrique par rapport audit axe optique principal (31) et servant à disposer une desdites lentilles optiques (37) dans ledit axe optique principal (31), lesdites lentilles optiques (37) étant portées par ledit premier tambour rotatif (39) de manière que leurs axes optiques sont essentiellement parallèles audit premier axe de rotation (40) en vue de leur superposition alternante audit axe optique principal (31), le duromètre comprenant, en outre, au moins une cellule dynamométrique (27) interposée entre lesdits moyens pousseurs (4) et ledit pénétrateur (5) et servant au contrôle dynamique de la charge appliquée audit pénétrateur (5), ladite au moins une cellule dynamométrique (27) comprenant une première portion (42) formée essentiellement comme un pivot creux et orientée de façon coaxiale par rapport audit axe optique principal (31), et une seconde portion (43) essentiellement de forme annulaire et radialement externe par rapport à la première portion (42), ladite première portion (42) et ladite seconde portion (43) étant essentiellement coaxiales l'une par rapport à l'autre et pouvant être respectivement associées fonctionnellement audit pénétrateur (5) et auxdits moyens pousseurs (4) et reliées mutuellement par une pluralité de branches (44) associées à des éléments de détection (45) servant à mesurer ladite charge appliquée, lesdits moyens de déplacement (46) comprenant un corps de maintien de pénétrateur (47), qui maintient fonctionnellement ledit pénétrateur (5) et est associé de façon rotative à ladite première portion (42), le long d'un axe de pivotement (48) essentiellement perpendiculaire audit axe optique principal (31), et qui sert à déplacer ledit pénétrateur (5) depuis ledit champs de vision par contraste avec des moyens de rappel élastiques.

2. Duromètre suivant la revendication 1, **caractérisé en ce qu'**il comprend des moyens (26) servant à éclairer ladite indentation (18), moyens, qui sont portés fonctionnellement par ledit manchon (30).

3. Duromètre suivant la revendication 2, **caractérisé en ce que** ledit moyen d'éclairage (26) comprend une source de lumière (32), qui définit un faisceau lumineux (33) essentiellement orienté selon l'axe optique principal (31) et radialement par rapport à celui-ci, et au moins une lame semi-réfléchissante (34), qui est disposée à l'intérieur de ladite cellule dynamométrique (27) de façon inclinée par rapport audit axe optique principal (31) et définit une première surface réfléchissante (35) servant à réfléchir ledit faisceaux lumineux (33) sur ladite indentation (18) et une seconde surface transparente (36) servant à capturer ladite image par l'un desdits au moins un premier capteur d'image numérique (28) et au moins un second capteur d'image numérique.

4. Duromètre suivant une ou plusieurs des revendications précédentes, **caractérisé en ce qu'**il comprend des moyens d'actionnement (49) qui agissent sur ledit corps de maintien de pénétrateur (47) pour mettre ledit pénétrateur (5) en rotation par rapport audit axe optique principal (31).
